# EUROPÄISCHE PATENTSCHRIFT

(11) **EP 3 443 215 B1**
(45) Veröffentlichungstag und Bekanntmachung des Hinweises auf die Patenterteilung: **17.06.2020**
(21) Anmeldenummer: 17708228.6
(22) Anmeldetag: 01.03.2017
(51) Int. Cl.: F02M 59/36, F02M 59/46, F02M 63/00

(54) **VENTIL, INSBESONDERE SAUGVENTIL, IN EINER HOCHDRUCKPUMPE EINES KRAFTSTOFFEINSPRITZSYSTEMS**
VALVE, IN PARTICULAR A SUCTION VALVE, IN A HIGH-PRESSURE PUMP OF A FUEL INJECTION SYSTEM
SOUPAPE, EN PARTICULIER SOUPAPE D'ASPIRATION, DANS UNE POMPE HAUTE PRESSION D'UN SYSTÈME D'INJECTION DE CARBURANT

(30) Priorität: 13.04.2016 DE 102016206180
(43) Veröffentlichungstag der Anmeldung: 20.02.2019
(73) Patentinhaber: Robert Bosch GmbH, 70442 Stuttgart (DE)
(72) Erfinder: KOLB, Stefan, 71116 Gaertringen (DE); HOLM, Steffen, 70569 Stuttgart (DE)
(86) Internationale Anmeldenummer: PCT/EP2017/054766
(87) Internationale Veröffentlichungsnummer: WO 2017/178149

(56) Entgegenhaltungen:
- DE-A1-102013 225 162
- DE-A1-102014 214 811

## Beschreibung

Die Erfindung betrifft ein Ventil, insbesondere ein Saugventil, in einer Hochdruckpumpe eines Kraftstoffeinspritzsystems, mit den Merkmalen des Oberbegriffs des Anspruchs 1. Ferner betrifft die Erfindung eine Pumpe, insbesondere eine Hochdruckpumpe eines Kraftstoffeinspritzsystems, in der das Saugventil eingesetzt ist.

### Stand der Technik

Ein Ventil, insbesondere ein elektromagnetisch ansteuerbares Saugventil, einer Hochdruckpumpe eines Kraftstoffeinspritzsystems ist durch die DE 10 2013 225 162 A1 bekannt. Das Saugventil weist ein Ventilelement auf, das zwischen einer Öffnungs- und einer Schließstellung beweglich ist, mit einem Magnetanker der mit dem Ventilelement in axialer Richtung in mechanischem Kontakt steht und der auf der dem Ventilelement abwandten Seite an einer ersten Druckfeder in Anlage steht, und wobei der Magnetanker durch eine elektromagnetische Ansteuerung axial beweglich ist und sich in einer Ausgangsposition über eine Anschlagplatte an einem Ventilkörper abstützt.

Der Magnetanker ist Teil eines elektromagnetischen Aktors, der außerdem eine Magnetspule umfasst. Bei Bestromung der Magnetspule bildet sich ein Magnetfeld aus wodurch sich der Magnetanker relativ zur Magnetspule gegen eine Federkraft bewegt um einen Arbeitsluftspalt zu schließen.

Die aus der DE 10 2013 225 162 A1 bekannte Hochdruckpumpe eines Kraftstoffeinspritzsystems mit Saugventil, bei der alle vorangehend beschriebenen Elemente mit Kraftstoff umgeben sind, weist gewisse Nachteile auf.

Aufgrund der hochdynamischen Schaltbewegungen des Ankers kann es bei einer in dem Ventilkörper axial frei beweglichen Anschlagplatte zu einem erhöhten Verschleiß an der Kontaktstelle der Anschlagplatte mit dem Ventilkörper kommen. Dies ist dadurch begründet, dass sich, insbesondere im Falle eines Anhaftens der Anschlagplatte an den Magnetanker, die Anschlagplatte vom Ventilkörper wegbewegt. Bei der Zurückbewegung kann es zu einem Zusammenstoßen der Anschlagplatte mit dem Ventilkörper kommen, wobei eine starke Impulskraft auf den Ventilkörper ausgeübt wird, und hierbei insbesondere die zusätzliche Masse des Magnetankers auf die Anschlagplatte wirkt. Dieser Effekt wird dadurch verstärkt, dass die Anschlagplatte aus einem gehärteten Material besteht und das relativ weiche Material des Ventilkörpers dadurch stark schädigen kann. Dadurch kann es zu einem Materialabtrag am Ventilkörper im Kontaktbereich und zu einer Funktionsbeeinträchtigung oder gar zu einer Verringerung der Lebensdauer des Saugventils und somit der Hochdruckpumpe kommen. Zudem wird der Arbeitsluftspalt durch den auftretenden Verschleiß und Materialverlust am Ventilkörper vergrößert. Dies kann zu einer Einschränkung der Funktion des Saugventils oder zu einem vollständigen Funktionsverlust des Saugventils führen.

Weiterhin kann eine Anhaftung der Anschlagplatte am Magnetanker zu einer partiellen Verdeckung der axialen Ausgleichsbohrungen des Magentankers über einen unbestimmten Zeitraum führen. Dadurch ist die Durchströmung des Magnetankers mit dem umgebenden Fluid nur eingeschränkt möglich, wodurch es zu unerwünscht schwankenden Ventilschaltzeiten kommt. Weiterhin wird dieser Effekt der Anhaftung der Anschlagplatte am sich bewegenden Magnetanker derart verstärkt, dass es bei einer axialen Bewegung des Magnetankers in Richtung des Ventilköpers, aufgrund der Strömungsrichtung des umgebenden Fluides, zu einem verstärkten Anhaften der Anschlagplatte am Magnetanker kommen kann. Eine Anhaftung und somit partielle Verdeckung der axialen Ausgleichsbohrungen des Magnetankers verschlechtert zudem die positiven Effekte des durchtströmenden Fluids, wie die Wärmeabfuhr und/oder die Schmutzabfuhr aus dem Saugventil.

### Offenbarung der Erfindung

Die erfindungsgemäße Ausgestaltung des Saugventils mit den Merkmalen aus Anspruch 1 hat den Vorteil, dass eine Schädigung eines Ventilkörpers durch eine mit einer Impulskraft anschlagenden Anschlagplatte verhindert wird, da die Anschlagplatte in axialer Richtung mit dem Ventilkörper in Anlage gehalten wird. Hieraus ergibt sich zum Einen eine erhöhte Lebensdauer des Saugventils und somit der gesamten Hochdruckpumpe, und zum Anderen eine geringere Ausfallwahrscheinlichkeit des Saugventils. Dies ist dadurch begründet, dass die Entstehung abrassiver Partikel vermindert wird, da eine Schädigung des Ventilskörpers durch die anprallende Anschlagplatte verhindert wird.

Des weiteren hat die Ausgestaltung des Saugventils gemäß Anspruch 1 den Vorteil, dass eine Vermeidung und/oder Verringerung von Materialabtragung und Schädigung des Ventilkörpers erzielt wird. Dadurch kann eine Vergrößerung des Arbeitsluftspalts über die Lebensdauer des Saugventils vermieden werden, wodurch eine Einschränkung der Funktion des Saugventils oder ein vollständiger Funktionsverlust verhindert werden kann.

Weiterhin hat die Ausgestaltung des Saugventils gemäß Anspruch 1 den Vorteil, dass ein Anhaften der Anschlagplatte am Magnetanker vermieden wird. Dadurch kann verhindert werden, dass es zu einer partiellen Verdeckung von axialen Ausgleichsbohrungen des Magnetankers kommt. Dies hat den Vorteil, dass unerwünschte schwankende Ventilschaltzeiten, verursacht durch eine eingeschränkte Durchströmung des umgebenden Fluids durch den Magnetanker in beide axialen Richtungen, je nach axialer Bewegungsrichtung des Magnetankers, verhindert werden. Somit ist durch die Ausgestaltung des Saugventils gemäß Anspruch 1 eine optimale Schmutzabfuhr aus dem Saugventil und eine optimale Kühlung durch das durchströmende Fluid gewährleistet.

Gemäß den weiteren Merkmalen der abhängigen Ansprüche weist die erfinderische Ausgestaltung des Ventils oder der Pumpe weitere Vorteile gegenüber dem Stand der Technik auf:
Vorteilhaft ist es, dass durch eine kraftschlüssige und/oder formschlüssige Verbindung eines Befestigungselements mit dem Ventilelement gewährleistet wird, dass die Anschlagplatte in axialer Richtung am Ventilkörper zuverlässig über die Lebensdauer des Saugventils und somit der Hochdruckpumpe gehalten wird.

Durch diese zuverlässige Verbindung des Befestigungselements mit dem Ventilelement wird das in Anlage halten von Anschlagplatte und Ventilkörper ermöglicht und somit eine Steigerung der Zuverlässigkeit und Lebensdauer des Saugventils erzielt.

Ein weiterer Vorteil besteht darin, dass das Befestigungselement formschlüssig und/oder kraftschlüssig mit der Anschlagplatte verbunden ist. Dadurch kann die Anschlagplatte fest an dem Ventilkörper gehalten werden und ein axiales Wegbewegen der Anschlagplatte vom Ventilkörper kann verhindert werden. Dies wiederum hat zum Vorteil, dass eine Schädigung des Ventilkörper reduziert wird und somit die Ausfallwahrscheinlichkeit des Saugventils reduziert wird.

Vorteilhaft ist es weiterhin, dass eine formschlüssige Verbindung zwischen der Anschlagplatte und dem Befestigungselement derart hergestellt wird, dass eine fertigungstechnische Bearbeitung beider Teile mit relativ wenig Aufwand durchgeführt werden kann, da radiale Toleranzunterschiede zwischen dem Innendurchmesser der Anschlagplatte und dem Außendurchmesser des Befestigungselements durch eine Elastizität des Befestigungselements in radialer Richtung ausgeglichen werden können. Des weiteren kann sich aufgrund der Abschrägung der Bauteile Anschlagplatte und Befestigungselement in Ihrem Kontaktbereich und aufgrund der Elastizität des Befestigungselements beide Bauteile auch in axialer Richtung so ausrichten, dass eine Anlage des Bauteils Anschlagplatte und Ventilkörper in jedem Fall gewährleistet ist. Auch wenn es eine gewisse Streuung der Außen- und Innen-Durchmesser-Toleranzen bei der Fertigung der Bauteile gibt, kann somit gewährleistet werden, dass der Ventilkörper und die Anschlagplatte zuverlässig in Anlage gehalten werden. Dadurch sind Kosteneinsparungen bei der Fertigung möglich.

Ein weiterer Vorteil der erfindungsgemäßen Ausprägung des Saugventils besteht darin, dass durch die Verwendung des Prinzips der Rastung eine formschlüssige Fixierung des Befestigungselements am Ventilkörper und/oder an der Anschlagplatte erzielt werden kann. Bei dem in Anspruch 5 beschriebenen Prinzip der Rastung müssen keine weiteren Materialen wie Kleber oder Schweißgut verwendet werden, sondern die formschlüssige Verbindung kann durch die konstruktive Ausformung der Bauteile zueinander erzielt werden. Dadurch lässt sich die Montagezeit verkürzen und Kosten aufgrund von eingesparten Fügematerial und verkürzter Montagezeit einsparen.

Zudem bedarf die konstruktive Ausprägung der Elemente Anschlagplatte und Ventilement nur eines geringen fertigungstechnischen Aufwands, da eine umlaufende Aussparung gleichförmig ausgeführt ist und mittels eines einzigen Fertigungsschrittes in das jeweilige Bauteil eingebracht werden kann. Dies führt zu einer Kosteneinsparung und Zeiteinsparung bei der Fertigung.

Einen weiteren Vorteil hat die erfindungsgemäße Ausführung des Befestigungselements als elastische Element, da somit Toleranzschwankungen der axial relevanten Maße an der Anschlagplatte, am Ventilkörper und auch am Befestigungselement, insbesondere der Toleranzkette der Elemente, ausgeglichen werden können. Dies reduziert die Fehleranfälligkeit, aber auch die Fertigungskosten der Elemente, da ein aufgeweiterer Toleranzbereich der Einzelteile auf Fertigungsebene zugrunde gelegt werden kann.

Des weiteren ergibt sich der Vorteil, dass das Befestigungselement als einteilige Lösung ausgeführt ist. Dadurch reduziert sich eine eventuelle Fehleranfälligkeit des Bauteils bei der Montage und im montierten Zustand, da die Anfälligkeit einer Verbindung von mehreren Bauteilen bei einer einteiligen Lösung entfällt. Dies verringert die Ausfallwahrscheinlichkeit des Saugventils.

Die Erfindung bietet zudem den Vorteil einer vereinfachten Montage durch eine erste umlaufende Aussparung am Ventilkörper und durch eine zweite umlaufende Aussparung an der Anschlagplatte, da sie jeweils mit einer ersten umlaufenden Überhöhung und/oder einer zweiten umlaufenden Überhöhungen des Befestigungselement eine formschlüssige Verbindung ausbilden können. Das Befestigungselement muss somit nur in den Ventilkörper und die Anschlagplatte eingeschoben und bildet mittels des Prinzips der Rastung einen stabilen Verbund. Dies reduziert den Montageaufwand und die bei der Montage auftretenden Kosten.

Durch die erfindungsgemäße Ausprägung einer Fixierbuchse als elastisches Element wird die Montage vereinfacht, da eine Verbesserung des Effektes der Rastung erreicht werden kann.

Durch einen optimierten einlaufenden und auslaufenden Bereich der Überhöhung, der gerade, abgeschrägt oder gerundet ausgeführt sein kann, wird die Fixierbuchse nahezu selbstständig in die Aussparung der Anschlagplatte und des Ventilelements hineingleiten und kann somit eine formschlüssige Verbindung ausbilden. Die Montagekräfte können somit reduziert werden und es ergibt sich eine Zeitersparnis und eine Kostenersparnis bei der Montage.

Weitere Vorteile des Verfahrens zur Herstellung des erfindungsgemäßen Saugventils gemäß Anspruch 11:
Dadurch, dass zuerst das Befestigungselement in eine korrekte Position zur Anschlagplatte und zum Ventilkörper gebracht wird und anschliessend in einem zweiten Schritt derart umgeformt wird, dass eine formschlüssige Verbindung entsteht, kann das Befestigungselement mit weniger eng einzuhaltenden Toleranzen gefertigt werden. Die finale Formgebung, um das Befestigungselement zu einer formschlüssigen Verbindung mit der Anschlagplatte und dem Ventilkörper zu bringen, kann durch das Verfahren der Umformung erfolgen. Dadurch ergibt sich eine Ersparnis bei den Fertigungskosten. Weiterhin ist eine vereinfachte Montage in nur 2 Schritten möglich, die sich aus einem Einlegen des Befestigungselementes und dem anschliessenden Umformen ergibt. Vorteile ergeben sich hier durch eine Reduzierung der Montagezeit und der Montagekosten.

### Zeichnung

Ein Ausführungsbeispiel der Erfindung ist in der Zeichnung dargestellt und in der nachfolgenden Beschreibung näher erläutert. Es zeigen:
- Figur 1: eine Pumpe in einem Längsschnitt,
- Figur 2: einen in Figur 1 mit II bezeichneten Ausschnitt der Pumpe in vergrößerter Darstellung mit einem Saugventil,
- Figur 3: einen in Figur 2 mit III bezeichneten Ausschnitt des Saugventils in vergrößerter Darstellung gemäß einem ersten Ausführungsbeispiels, wobei eine Anschlagplatte einen Hinterschnitt und/oder eine Abschrägung aufweist und ein Befestigungselement eine erste umlaufende Überhöhung ausbildet.
- Figur 4: einen in Figur 3 mit IV bezeichneten Ausschnitt des Saugventils in vergrößerter Darstellung gemäß dem ersten Ausführungsbeispiels, wobei die Anschlagplatte den Hinterschnitt und/oder die Abschrägung aufweist.
- Figur 5: einen in Figur 2 mit III bezeichneten Ausschnitt des Saugventils gemäß einem zweiten Ausführungbeispiel, wobei das Befestiungselement die erste umlaufende Überhöhung und eine zweite umlaufende Überhöhung am Außendurchmesser aufweist.
- Figur 6: einen in Figur 4 mit V bezeichneten Ausschnitt des Saugventils in vergrößerter Darstellung gemäß dem zweiten Ausführungbeispiel, wobei das Befestigungselement die erste umlaufende Überhöhung und die zweite umlaufende Überhöhung am Außendurchmesser aufweist.
- Figur 7: einen in Figur 4 mit V bezeichneten Ausschnitt des Saugventils in vergrößerter Darstellung gemäß einem dritten Ausführungbeispiel, wobei das Befestigungselement die erste umlaufende Überhöhung und die zweite umlaufende Überhöhung am Außendurchmesser aufweist.
- Figur 8: einen in den Figuren 5, 6 und 7 mit VI bezeichneten Ausschnitt insbesondere der Fixierbuchse in vergrößerter Darstellung, wobei die Fixierbuchse in dem Bereich der ersten und/oder der zweiten umlaufenden Überhöhungen im einlaufenden und auslaufenden Bereich der Überhöhung einen gerade Verlauf aufweist.
- Figur 9: einen in den Figuren 6 und 7 mit VI bezeichneten Ausschnitt insbesondere der Fixierbuchse in vergrößerter Darstellung, wobei die Fixierbuchse in dem Bereich der ersten und/oder der zweiten umlaufenden Überhöhungen im einlaufenden und auslaufenden Bereich der Überhöhung einen abgeschrägten Verlauf aufweist.
- Figur 10: einen in den Figuren 6 und 7 mit VI bezeichneten Ausschnitt insbesondere der Fixierbuchse in vergrößerter Darstellung, wobei die Fixierbuchse in dem Bereich der ersten und/oder der zweiten umlaufenden Überhöhungen im einlaufenden und auslaufenden Bereich der Überhöhung einen gerundeten Verlauf aufweist.

### Beschreibung der Ausführungsbeispiele

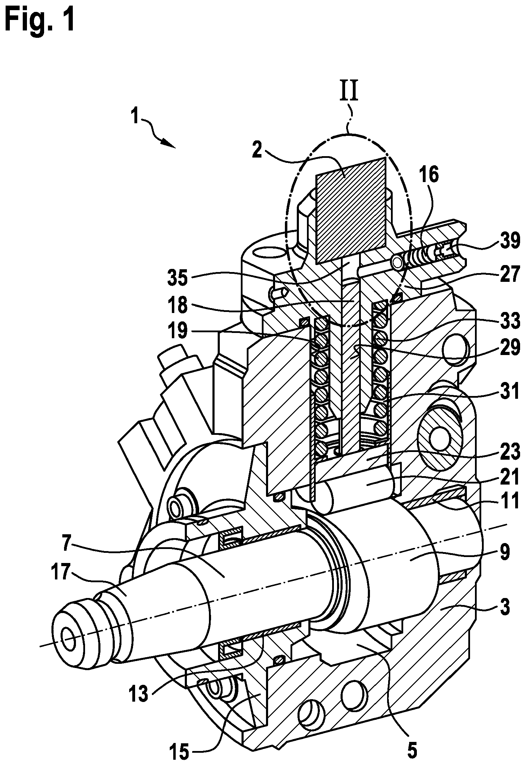

**Fig.** 1 zeigt eine Schnittdarstellung einer schematisch dargestellten Hochdruckpumpe **1**, die als Kraftstoffhochdruckpumpe ausgebildet ist und vorzugsweise bei einem Common-Rail-Einspritzsystem verbaut ist. Mittels der Hochdruckpumpe **1** wird von einem Kraftstoffniederdrucksystem, das zumindest einen Tank, einen Filter und eine Niederdruckpumpe aufweist, bereitgestellter Kraftstoff in einen Hochdruckspeicher gefördert, aus dem der dort gespeicherte Kraftstoff von Kraftstoffinjektoren zur Einspritzung in zugeordnete Brennräume einer Brennkraftmaschine entnommen wird. Die Zubringung des Kraftstoffes zu einem Pumpenarbeitsraum **35** erfolgt über ein elektro-magnetisches ansteuerbares Saugventil **2**, wobei das elektromagnetisch ansteuerbare Saugventil nachfolgend noch erläutert wird, an der Hochdruckpumpe **1** verbaut ist.

Die Hochdruckpumpe **1** weist ein Pumpengehäuse **3** mit einem Nockenwellenraum **5** auf. In den Nockenwellenraum **5** ragt eine Nockenwelle **7** mit einem beispielsweise als Doppelnocken ausgebildeten Nocken **9** hinein. Die Nockenwelle **7** ist in zwei beidseits des Nockens **9** angeordnete und als Radiallager ausgebildeten Lagern in Form eines in dem Pumpengehäuse **3** angeordneten Gehäuselagers **11** und eines Flanschlagers **13**, das in einem mit dem Pumpengehäuse **3** verbundenen Flansch **15**, der den Nockenwellenraum **5** zur Umgebung hin dicht abschließt, gelagert. Der Flansch **15** weist eine durchgehende Öffnung auf, durch die ein antriebsseitiger Endabschnitt **17** der Nockenwelle **7** hindurch ragt. Der antriebsseitige Endabschnitt **17** weist beispielsweise eine Konus auf, auf den ein Antriebsrad aufgesetzt und gesichert ist. Das Antriebsrad ist beispielsweise als Riemenrad oder Zahnrad ausgebildet. Das Antriebsrad wird von der Brennkraftmaschine direkt oder indirekt beispielsweise über einen Riementrieb oder ein Zahnradgetriebe angetrieben.

In das Pumpengehäuse **3** ist weiterhin eine Stößelführung **19** eingelassen, in die ein eine Laufrolle **21** aufweisender Rollenstößel **23** eingesetzt ist. Die Laufrolle **21** läuft auf dem Nocken **9** der Nockenwelle **7** bei einer Drehbewegung derselben ab und der Rollenstößel **23** wird somit in der Stößelführung **19** translatorisch auf und ab bewegt. Dabei wirkt der Rollenstößel **23** mit einem Pumpenkolben **18** zusammen, der in einer in einem Pumpenzylinderkopf **27** ausgebildeten Zylinderbohrung **29** ebenfalls translatorisch auf und ab bewegbar angeordnet ist.

In einem von der Stößelführung **19** und der Zylinderbohrung **29** gebildeten Stößelfederraum **31** ist eine Stößelfeder **33** angeordnet, die sich einerseits an dem Pumpenzylinderkopf **27** und andererseits an dem Rollenstößel **23** abstützt und eine dauerhafte Anlage der Laufrolle **21** auf dem Nocken **9** in Richtung der Nockenwelle **7** sicherstellt. In dem Pumpenzylinderkopf **27** ist in Verlängerung des Pumpenkolbens **18** der Pumpenarbeitsraum **35** gebildet, in den über das elektromagnetisch ansteuerbare Saugventil **2** Kraftstoff eingebracht wird. Die Einbringung des Kraftstoffs erfolgt bei einer Abwärtsbewegung des Pumpenkolbens **18**, während bei einer Aufwärtsbewegung des Pumpenkolbens **18** in dem Pumpenarbeitsraum **35** befindlicher Kraftstoff über einen Hochdruckauslass **39** mit einem eingesetzten Auslassventil **16** über eine weiterführende Hochdruckleitung in den Hochdruckspeicher gefördert wird. Die Hochdruckpumpe **1** ist insgesamt kraftstoffgeschmiert, wobei der Kraftstoff von dem Niederdrucksystem in den Nockenwellenraum **5** gefördert wird, der mit dem Saugventil **2** strömungsverbunden ist. Dieses elektro-magnetisches ansteuerbare Saugventil **2** und dessen Funktionalität wird im Folgenden beschrieben.
Im Saugbetrieb der Hochdruckpumpe **1** ist das elektro-magnetisch ansteuerbare Saugventil **2** geöffnet und eine Verbindung des Pumpenarbeitsraums **35** mit einem Kraftstoffzulauf **26** hergestellt, so dass dem Pumpenarbeitsraum **35** über das Saugventil **2** Kraftstoff zugeführt wird. Im Förderbetrieb der Hochdruckpumpe **1** wird der dem Pumpenarbeitsraum **35** zugeführte Kraftstoff verdichtet und über das in dem Hochdruckauslass **39** angeordnete Hochdruckventil **16** einem Hochdruckspeicher (nicht dargestellt) zugeführt. Im Verdichtungsbetrieb der Hochdruckpumpe **1**, bei dem sich der Pumpenkolben **18** aufwärts bewegt, ist das Saugventil **2** geschlossen, wenn eine Kraftstoffförderung erfolgen soll, und dichtet den Pumpenarbeitsraum **35** gegenüber dem Kraftstoffzulauf **26** ab.

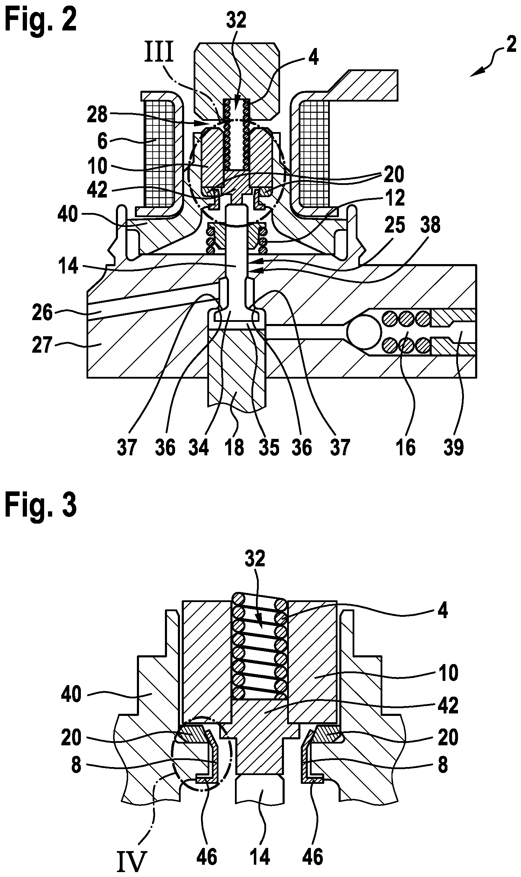

Das in **Fig.** 2 dargestellte, an die Hochdruckpumpe **1** angebaute elektromagnetisch ansteuerbare Saugventil **2**, weist ein kolbenförmiges Ventilelement **14** auf. Das kolbenförmige Ventilelement **14** weist einen Schaft **25**, insbesondere einen zylindrisch geformten Schaft **25**, und einen vergrößerten Kopf **34** auf. Zudem weist der Pumpenzylinderkopf **27** im Kontakbereich zum geschlossenen Ventilelement **14** einen Ventilsitz **36** auf. Das kolbenförmige Ventilelement **14** ist über den Schaft **25** in einer Bohrung **38** in dem Pumpenzylinderkopf **27** geführt und weist den im Durchmesser gegenüber dem Schaft **25** vergrößerten Kopf **34** auf. An diesem vergrößerten Kopf **34** des Ventilelements **14** ist eine Dichtfläche **37** ausgebildet, die in Schließstellung des Ventilelements **14** an dem Ventilsitz **36** im Pumpenzylinderkopf **27** zur Anlage kommt. Dadurch ist der Pumpenarbeitsraum **35** vom Kraftstoffzulauf **26** getrennt und es kann kein Kraftstoff zurückströmen.
In **Fig.** 2 werden die Elemente eines elektromagnetischen Aktors dargestellt: Dieser weist einen Magnetanker **10** mit einer zylindrischen Außenkontur und einer zentralen Bohrung **32** auf. Eine erste Druckfeder **4** ragt zudem in diese zentrale Bohrung **32** des Magnetankers **10** hinein, die eine axiale Kraft auf den Magnetanker **10** zum Ventilelement **14** hin ausübt. Der Magnetanker **10** wird zudem hubbeweglich in einem Ventilkörper **40** axial geführt, wobei sich eine Anschlagplatte **20** in axialer Richtung zwischen dem Ventilkörper **40** und dem Magnetanker **10** befindet. In radialer Richtung umgibt den Magnetanker **10** eine Magnetspule **6**, die bei Bestromung ein Magnetfeld ausbildet und somit eine magnetische Kraft auf den Magnetanker **10** ausüben kann.
Das Ventilelement **14** steht über einen Ankerbolzen **42** in Kontakt mit dem Magnetanker **10**, wobei beide Elemente in axialer Richtung nicht miteinander verbunden sind, sondern nur durch magnetische Kräfte und Federkräfte in Anlage miteinander gehalten werden. Das kolbenförmige Ventilelement **14** wird zudem in Schließrichtung von der Federkraft einer zweiten Druckfeder **12** beaufschlagt.
In axialer Richtung wirkt die erste Druckfeder **4** auf den Ankerbolzen **42** und den Magnetanker **10.** Die erste Druckfeder **4** sorgt in unbestromten Zustand dafür, dass der Ankerbolzen **42** auf das Ventilelement **14** wirkt und es in geöffneter Position hält. Dem wirkt zwar die zweite Druckfeder **12** entgegen, da jedoch die erste Druckfeder **4** eine höhere Federkraft besitzt wird das Ventilelement **14** in geöffnetem Zustand gehalten. Durch eine Bestromung des Magnetankers **10** mittels der Magnetspule **6** bewegt sich der Magnetanker **10** gegen die Kraft der ersten Druckfeder **4** vom Ventilelement **14** weg, um den Arbeitsluftspalt **28** zu schließen. Durch das Wegbewegen verliert der Ankerbolzen **42** den kraftschlüssigen Kontakt zum Ventilelement **14** wodurch sich das Ventilelement **14** durch die Kraft der zweiten Druckfeder **12** in Richtung geschlossener Zustand bewegt. In vollständig geschlossenem Zustand des Ventilelements **14** liegt dieses mit der Dichtfläche **37** am Ventilsitz **36** an und dichtet den Pumpenarbeitsraum **35** gegenüber dem Kraftstoffzulauf **26** ab.

Anhand der **Fig.** 3 bis 7 werden nachfolgend verschiedene Ausführungsbeispiele der Kombination eines Befestigungselements **8** mit der Anschlagplatte **20** und dem Ventilkörper **40** erläutert.

Der in **Fig.** 3 dargestellte Ausschnitt III zeigt einen Schnitt des Saugventils **2** gemäß einem ersten Ausführungsbeispiel. Der Schnitt zeigt das Befestigungselement **8,** das formschlüssig mit dem Ventilelement **40** und der Anschlagplatte **20** verbunden ist und in diesem ersten Ausführungsbeispiel nur eine erste radial nach außen ragende umlaufende Überhöhung **46** ausbildet. Des weiteren sind das Ventilelement **14** dargestellt, sowie der Ankerbolzen **42,** der insbesondere in die zentrale Bohrung **32** den Magnetankers **10** eingepresst sein kann und mit der Federkraft der ersten Druckfeder **4** beaufschlagt wird. Zudem steht das Befestigungselement **8** mit der ersten umlaufenden Überhöhung **46** mit dem Ventilkörper **40** in axialer Richtung in Anlage.

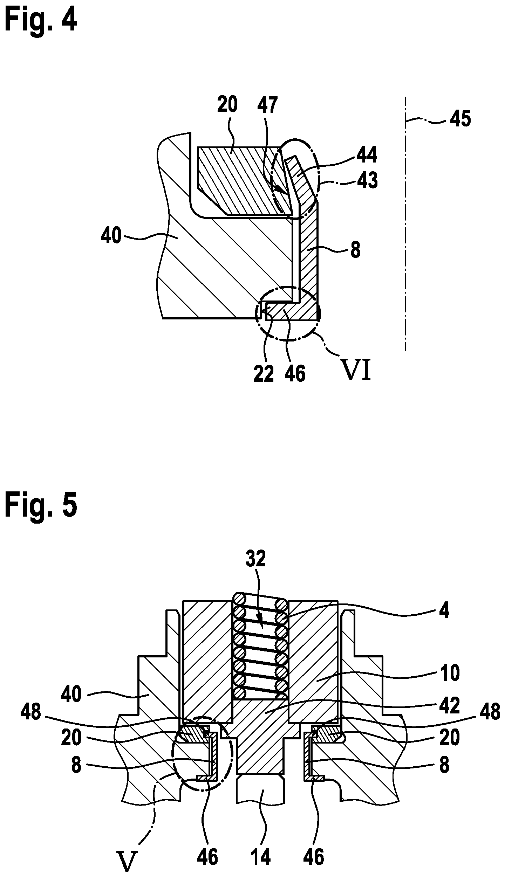

In **Fig.** 4 ist das erste Ausführungsbeispiel dargestellt, bei dem das Befestigungselement **8** nur die erste umlaufende Überhöhung **46** aufweist. Der Ventilkörper **40** weist eine erste umlaufende Aussparung **22** auf, die insbesondere als Absatz ausgeführt ist, an der die erste umlaufende Überhöhung **46** des Befestigungselements **8** in axialer Richtung anliegt, wodurch das Ventilelement **40** mit dem Befestigungselement **8** eine formschlüssige Verbindung ausbildet. Das Befestigungselement **8** kann hierbei insbesondere als Fixierbuchse **8** ausgeführt sein. Dabei weist die Fixierbuchse **8** auf der dem Magnetanker **10** zugewandten Seite einen radial nach außen verlaufenden abgeschrägten Verlauf **44** auf, der einen mit einem Hinterschnitt **47** versehenen Bereich der Anschlagplatte **20** hintergreift und dadurch eine formschlüssige Verbindung mit der Anschlagplatte **20** ausbildet. Hierbei wird insbesondere ein Kontaktbereich **43** zwischen der Anschlagplatte **20** und der Fixierbuchse **8** ausgebildet.
Des weiteren ist in **Fig.** 4 eine Mittellinie **45** dargestellt. Um diese Mittellinie **45** ist die Fixierbuchse **8** insbesondere rotationssymetrisch ausgeführt, wobei der Bereich der ersten umlaufenden Überhöhung **46** und der Bereich mit dem abgeschrägten Verlauf radial nach außen ragen. Weiterhin steht das Befestigungselement in Bereich seines Außendurchmessers zumindest teilweise in Kontakt mit dem Innendurchmesser des Ventilkörpers **40** und dem Innendurchmesser der Anschlagplatte **20.**

**Fig.** 5 zeigt den Auschnitt III aus **Fig.** 2, bei dem ein Schnitt des Saugventils **2** gemäß einem zweiten Ausführungsbeispiels dargestellt wird. Der Schnitt zeigt das Befestigungselement **8**, das formschlüssig mit dem Ventilelement **40** und der Anschlagplatte **20** verbunden ist und in diesem zweiten Ausführungsbeispiel die erste umlaufende Überhöhung **46** und eine zweite umlaufende Überhöhung **48** ausbildet. Das Befestigungselement **8** kann hierbei insbesondere als Fixierbuchse **8** ausgeführt sein. Des weiteren sind das Ventilelement **14** und der Ankerbolzen **42** dargestellt, wobei der Ankerbolzen **42** insbesondere in die zentrale Bohrung **32** des Magnetankers **10** eingepresst sein kann und mit der Federkraft der ersten Druckfeder **4** beaufschlagt wird. Die Fixierbuchse **8** steht auf der dem Magnetanker **10** abgewandten Seite mit der ersten umlaufenden Überhöhung **46** mit dem Ventilkörper **40** in Anlage. Weiterhin bildet die Fixierbuchse **8** auf der dem Magnetanker **10** zugewandten Seite mit der Anschlagplatte **20** eine formschlüssige Verbindung aus, da hier die zweite umlaufende Überhöhung **48** der Fixierbuchse **8** in eine zweite umlaufende Aussparung **24** der Anschlagplatte **20** hineinragt.

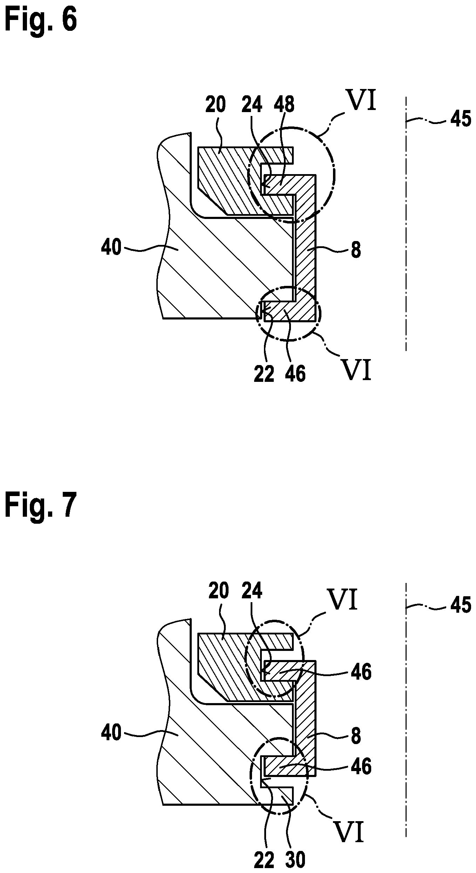

In **Fig.** 6 ist das zweite Ausführungsbeispiel dargestellt, bei dem das Befestigungselement **8** die erste umlaufende Überhöhung **46** und die zweite umlaufende Überhöhung **48** aufweist. Das Befestigungselement **8** kann hierbei insbesondere als Fixierbuchse **8** ausgeführt sein. Der Ventilkörper **40** weist die erste umlaufende Aussparung **22** auf, die insbesondere als Absatz ausgeführt ist, an der die erste umlaufende Überhöhung **46** der Fixierbuchse **8** in axialer Richtung anliegt, wodurch das Ventilelement **40** mit dem Befestigungselement eine formschlüssige Verbindung ausbildet. Des weiteren weist die Fixierbuchse **8** auf der dem Magnetanker **10** zugewandten Seite die zweite umlaufende Überhöhung **48** auf, die in die zweite umlaufende Aussparung **24** der Anschlagplatte **20** hereinragt. Dadurch kann von der Anschlagplatte **20** und von dem Befestigungselement **8** eine formschlüssige Verbindung ausgebildet werden. Des weiteren ist in **Fig.** 6 eine Mittellinie **45** dargestellt. Um diese Mittellinie **45** ist die Fixierbuchse **8** insbesondere rotationssymetrisch ausgeführt ist, wobei der Bereich der ersten umlaufenden Überhöhung **46** und der Bereich der zweiten umlaufenden Überhöhung **48** radial nach außen ragen. Weiterhin steht das Befestigungselement in Bereich seines Außendurchmessers zumindest teilweise in Kontakt mit dem Innendurchmesser des Ventilkörpers **40** und dem Innendurchmesser der Anschlagplatte **20.**

**Fig.** 7 zeigt ein drittes Ausführungsbeispiel, bei dem das Befestigungselement **8** die erste umlaufende Überhöhung **46** und die zweite umlaufende Überhöhung **48** aufweist. Das Befestigungselement **8** kann hierbei insbesondere als Fixierbuchse **8** ausgeführt sein. Im Unterschied zum zweiten Ausführungsbeispiel weist der Ventilkörper **40** zwar auch die erste umlaufende Aussparung **22** auf, diese ist jedoch nicht als Absatz ausgeführt, sondern ist in axialer Richtung in das Bauteil Ventilkörper **40** verlagert und der Ventilkörper **40** bildet auf der der Anschlagplatte **20** abgewandten Seite einen zusätzlichen Bund **30** auf. In diese ersten umlaufenden Aussparung **22** des Ventilkörpers **40** ragt die Fixierbuchse **8** in radialer Richtung mit der ersten umlaufenden Überhöhung **46** und bildet dadurch eine formschlüssige Verbindung aus. Des weiteren weist die Fixierbuchse **8** auf der dem Magnetanker **10** zugewandten Seite die zweite umlaufende Überhöhung **48** auf, die in die zweite umlaufende Aussparung **24** der Anschlagplatte hereinragt. Dadurch kann von der Anschlagplatte **20** und von der Fixierbuchse **8** eine formschlüssige Verbindung ausgebildet werden.
Des weiteren ist in **Fig.** 7 eine Mittellinie **45** dargestellt. Um diese Mittellinie **45** ist die Fixierbuchse **8** insbesondere rotationssymetrisch ausgeführt ist, wobei der Bereich der ersten umlaufenden Überhöhung **46** und der Bereich der zweiten umlaufenden Überhöhung **48** radial nach außen ragen. Weiterhin steht das Befestigungselement in Bereich seines Außendurchmessers zumindest teilweise in Kontakt mit dem Innendurchmesser des Ventilkörpers **40** und dem Innendurchmesser der Anschlagplatte **20.**

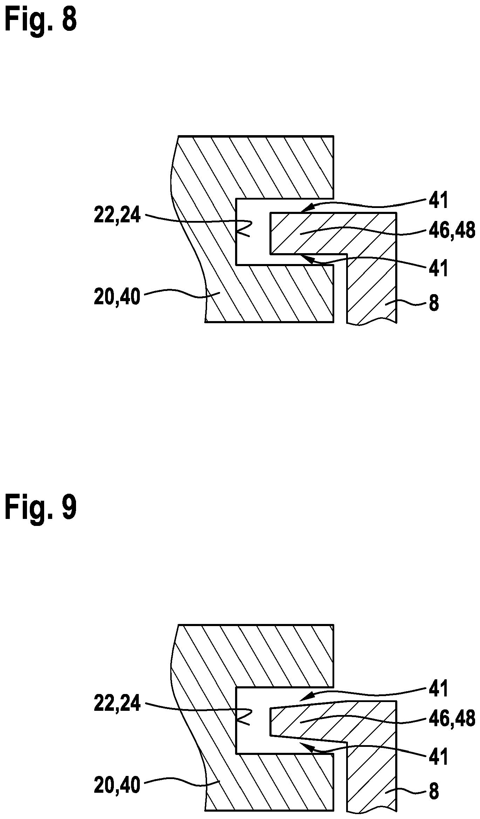

In den **Fig.** 8 bis 10 sind verschiedene Ausführungsformen dargestellt, wie der Verlauf der ersten umlaufenden Überhöhung **46** oder der zweiten umlaufenden Überhöhung **48** in dem jeweiligen einlaufenden und auslaufenden Bereich geartet ist, mit dem die Fixierbuchse **8** in die erste umlaufenden Aussparung **22** des Ventilkörpers **40** oder die zweite umlaufende Aussparung **24** der Anschlagplatte **20** hineinragt.

In **Fig.** 8 wird eine erste Ausführungsform der ersten umlaufenden Überhöhung **46** und/oder der zweiten umlaufenden Überhöhung **48** gezeigt, bei dem ein Verlauf **41** der Überhöhung **46, 48** im einlaufenden und auslaufenden Bereich gerade geartet ist.

In **Fig.** 9 wird eine zweite Ausführungsform der ersten umlaufenden Überhöhung **46** und/oder der zweiten umlaufenden Überhöhung **48** gezeigt, bei dem der Verlauf **41** der Überhöhung **46, 48** im einlaufenden und auslaufenden Bereich abgeschrägt geartet ist.

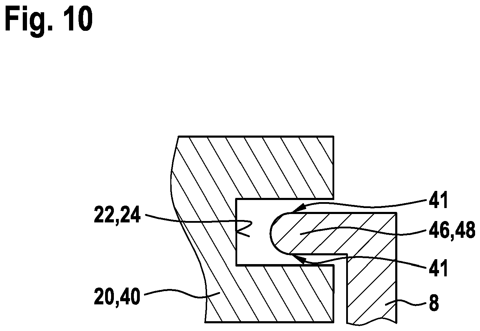

In **Fig.** 10 wird eine dritte Ausführungsform der ersten umlaufenden Überhöhung **46** und/oder der zweiten umlaufenden Überhöhung **48** gezeigt, bei dem der Verlauf **41** der Überhöhung **46, 48** im einlaufenden und auslaufenden Bereich gerundet geartet ist.

Die vorstehend erläuterten Ausführungsbeispiele und Ausführungsformen des Befestigungselements **8** und/oder der Fixierbuchse **8,** der Anschlagplatte **20** und des Ventilkörpers **40** können in beliebiger Weise miteinander kombiniert werden.

## Patentansprüche

1. Ventil, insbesondere Saugventil (2), insbesondere in einer Hochdruckpumpe eines Kraftstoffeinspritzsystems, das ein Ventilelement (14) aufweist, das zwischen einer Öffnungsstellung und einer Schließstellung beweglich ist, mit einem Magnetanker (10) der mit dem Ventilelement (14) in axialer Richtung in mechanischem Kontakt steht und der auf der dem Ventilelement (14) abgewandten Seite an einer ersten Druckfeder (4) in Anlage steht, und wobei der Magnetanker (10) durch eine elektromagnetische Ansteuerung axial beweglich ist und sich in einer Ausgangsposition über eine Anschlagplatte (20) an einem Ventilkörper (40) abstützt, **dadurch gekennzeichnet, dass** die Anschlagplatte (20) über ein Befestigungselement (8) in axialer Richtung an dem Ventilkörper (40) in Anlage gehalten wird.

2. Ventil nach Anspruch 1, **dadurch gekennzeichnet, dass** das Befestigungselement (8) kraftschlüssig und/oder formschlüssig mit dem Ventilkörper (40) verbunden ist, und dass der Formschluss insbesondere derart erzielt wird, dass sich das Befestigungselement (8) mittels Anlage in axialer Richtung am Ventilkörper (40) abstützt.

3. Ventil nach Anspruch 1 oder 2, **dadurch gekennzeichnet, dass** das Befestigungselement (8) kraftschlüssig und/oder formschlüssig mit der Anschlagplatte (20) verbunden ist, und dass der Formschluss insbesondere derart erzielt wird, dass sich das Befestigungselement (8) mittels Anlage in axialer Richtung an der Anschlagplatte (20) abstützt.

4. Ventil nach Anspruch 3, **dadurch gekennzeichnet, dass** die Anschlagplatte (20) in dem Bereich ihres Innendurchmessers, der mit dem Befestigungselement (8) in Kontakt steht, einen Hinterschnitt und/oder eine Abschrägung (47) aufweist, wobei insbesondere das Befestigungselement (8) den Bereich des Hinterschnitts (47) der Anschlagplatte übergreift, so dass ein Kontaktbereich (43) zwischen der Anschlagplatte (20) und dem Befestigungselement (8) ausgebildet wird.

5. Ventil nach einem der Ansprüche 2 bis 3, **dadurch gekennzeichnet, dass** eine formschlüssige Verbindung des Befestigungselements (8) am Ventilkörper (40) und/oder an der Anschlagplatte (20) mittels einer Rastung des Befestigungselements (8) erreicht wird.

6. Ventil nach Anspruch 5, **dadurch gekennzeichnet, dass** die Rastung durch ein Hineinbewegen des Befestigungselements (8) in eine erste umlaufende Aussparung (22) am Ventilkörper (40) und/oder in eine zweite umlaufende Aussparung (24) an der Anschlagplatte (20) erzielt wird.

7. Ventil nach einem der Ansprüche 5 bis 6, **dadurch gekennzeichnet, dass** die Rastung des Befestigungselements (8) am Ventilkörper (40) und/oder an der Anschlagplatte (20) durch eine Elastizität des Befestigungselements (8) erzielt wird.

8. Ventil nach einem der Ansprüche 1 bis 7, **dadurch gekennzeichnet, dass** das Befestigungselement als eine Fixierbuchse (8) ausgeführt ist, die insbesondere rotationsysmetrisch ausgeführt ist und umlaufend mit dem Innendurchmesser des Ventilkörpers (40) und dem Innendurchmesser der Anschlagplatte (20) in Kontakt steht.

9. Ventil nach Anspruch 8, **dadurch gekennzeichnet, dass** die Fixierbuchse (8) am Außendurchmesser eine erste umlaufende Überhöhung (46) aufweist, die mittels einer Rastung in die erste umlaufende Aussparung (22) am Innendurchmesser des Ventilkörpers (40) und/oder eine zweite umlaufende Überhöhung (48) aufweist, die in diee zweite umlaufende Aussparung (24) am Innendurchmesser der Anschlagplatte (20) hineinragt.

10. Ventil nach Anspruch 9, **dadurch gekennzeichnet, dass** die erste umlaufende Überhöhung (46) und/oder die zweite umlaufende Überhöhung (48) am Außendurchmesser der Fixierbuchse (8) in ihrem einlaufenden und auslaufenden Bereich entweder einen geraden, einen abgeschrägten oder einen gerundeten Verlauf (41) aufweist/aufweisen.

11. Verfahren zur Herstellung eines Ventils nach einem der Ansprüche 1 bis 9, **dadurch gekennzeichnet, dass** das Befestigungselement (8) bei der Montage derart umgeformt wird, dass es eine formschlüssige Verbindung mit der Anschlagplatte (20) ausbildet, wobei sich das Befestigungselement (8) mittels Anlage in axialer Richtung an dem Ventilkörper (40) abstützt und somit die Anschlagplatte (20) und der Ventilkörper (40) durch das Befestigungselement (8) in Anlage gehalten werden.

12. Pumpe, insbesondere Hochdruckpumpe (1) eines Kraftstoffeinspritzsystems mit einem Saugventil (2), **dadurch gekennzeichnet, dass** das Saugventil (2) gemäß mindestens einem der vorrangegangenen Ansprüche ausgebildet ist.

## Claims

1. Valve, in particular suction valve (2), in particular in a high-pressure pump of a fuel injection system, which has a valve element (14) which is movable between an open position and a closed position, having a magnet armature (10) which is in mechanical contact with the valve element (14) in the axial direction and which, on the side facing away from the valve element (14), is in abutment with a first compression spring (4), and wherein the magnet armature (10) is axially movable by electromagnet actuation and, in a starting position, is supported against a valve body (40) via a stop plate (20), **characterized in that** the stop plate (20) is held in abutment with the valve body (40) in the axial direction via a fastening element (8).

2. Valve according to Claim 1, **characterized in that** the fastening element (8) is connected in a force-fitting manner and/or form-fitting manner to the valve body (40), and **in that** the form fit is achieved in particular such that the fastening element (8) is supported against the valve body (40) by means of abutment in the axial direction.

3. Valve according to Claim 1 or 2, **characterized in that** the fastening element (8) is connected in a force-fitting manner and/or form-fitting manner to the stop plate (20), and **in that** the form fit is achieved in particular such that the fastening element (8) is supported against the stop plate (20) by means of abutment in the axial direction.

4. Valve according to Claim 3, **characterized in that** the stop plate (20) has in the region of its inner diameter, which is in contact with the fastening element (8), an undercut and/or a bevel (47), wherein, in particular, the fastening element (8) engages over the region of the undercut (47) of the stop plate such that a contact region (43) between the stop plate (20) and the fastening element (8) is formed.

5. Valve according to either of Claims 2 and 3, **characterized in that** a form-fitting connection of the fastening element (8) to the valve body (40) and/or to the stop plate (20) is achieved by means of latching of the fastening element (8).

6. Valve according to Claim 5, **characterized in that** the latching is achieved by movement of the fastening element (8) into a first encircling recess (22) in the valve body (40) and/or into a second encircling recess (24) in the stop plate (20).

7. Valve according to either of Claims 5 and 6, **characterized in that** the latching of the fastening element (8) on the valve body (40) and/or on the stop plate (20) is achieved by way of elasticity of the fastening element (8).

8. Valve according to one of Claims 1 to 7, **characterized in that** the fastening element is designed as a fixing bush (8), which, in particular, is of rotationally symmetrical form and is in contact all the way round with the inner diameter of the valve body (40) and the inner diameter of the stop plate (20).

9. Valve according to Claim 8, **characterized in that** the fixing bush (8) has on the outer diameter a first encircling elevation (46), which, by means of latching, projects into the first encircling recess (22) at the inner diameter of the valve body (40), and/or has a second encircling elevation (48), which projects into the second encircling recess (24) at the inner diameter of the stop plate (20).

10. Valve according to Claim 9, **characterized in that** the first encircling elevation (46) and/or the second encircling elevation (48) at the outer diameter of the fixing bush (8) have/has in the leading region and trailing region thereof a straight, a bevelled or a rounded profile (41).

11. Method for producing a valve according to one of Claims 1 to 9, **characterized in that**, during the mounting, the fastening element (8) is deformed such that it forms a form-fitting connection to the stop plate (20), wherein the fastening element (8) is supported against the valve body (40) by means of abutment in the axial direction, and the stop plate (20) and the valve body (40) are thereby held in abutment by the fastening element (8).

12. Pump, in particular high-pressure pump (1) of a fuel injection system, having a suction valve (2), **characterized in that** the suction valve (2) is designed according to at least one of the preceding claims.

## Revendications

1. Soupape, notamment soupape d'aspiration (2), notamment dans une pompe haute pression d'un système d'injection de carburant, qui comprend un élément de soupape (14), qui peut se déplacer entre une position d'ouverture et une position de fermeture, avec une armature magnétique (10) qui est en contact mécanique avec l'élément de soupape (14) dans la direction axiale et qui prend appui, sur le côté opposé à l'élément de soupape (14), sur un premier ressort de compression (4), et l'armature magnétique (10) pouvant être déplacée axialement par une commande électromagnétique et reposant dans une position initiale sur un corps de soupape (40) par l'intermédiaire d'une plaque de butée (20), **caractérisée en ce que** la plaque de butée (20) est maintenue en appui sur le corps de soupape (40) dans la direction axiale par l'intermédiaire d'un élément d'attache (8).

2. Soupape selon la revendication 1, **caractérisée en ce que** l'élément d'attache (8) est relié par accouplement de force et/ou par accouplement de forme avec le corps de soupape (40), et **en ce que** l'accouplement de forme est obtenu notamment **en ce que** l'élément d'attache (8) repose sur le corps de soupape (40) dans la direction axiale par appui.

3. Soupape selon la revendication 1 ou 2, **caractérisée en ce que** l'élément d'attache (8) est relié par accouplement de force et/ou par accouplement de forme avec la plaque de butée (20), et **en ce que** l'accouplement de forme est notamment obtenu **en ce que** l'élément d'attache (8) repose sur la plaque de butée (20) dans la direction axiale par appui.

4. Soupape selon la revendication 3, **caractérisée en ce que** la plaque de butée (20) comprend une contre-dépouille et/ou un chanfrein (47) dans la zone de son diamètre intérieur qui est en contact avec l'élément d'attache (8), l'élément d'attache (8) débordant notamment sur la zone de la contre-dépouille (47) de la plaque de butée, de telle sorte qu'une zone de contact (43) soit formée entre la plaque de butée (20) et l'élément d'attache (8).

5. Soupape selon l'une quelconque des revendications 2 à 3, **caractérisée en ce qu'**une liaison par accouplement de forme de l'élément d'attache (8) sur le corps de soupape (40) et/ou sur la plaque de butée (20) est obtenue par l'intermédiaire d'un encliquetage de l'élément d'attache (8).

6. Soupape selon la revendication 5, **caractérisée en ce que** l'encliquetage est obtenu par une pénétration de l'élément d'attache (8) dans un premier évidement circonférentiel (22) sur le corps de soupape (40) et/ou dans un deuxième évidement circonférentiel (24) sur la plaque de butée (20).

7. Soupape selon l'une quelconque des revendications 5 à 6, **caractérisée en ce que** l'encliquetage de l'élément d'attache (8) sur le corps de soupape (40) et/ou sur la plaque de butée (20) est obtenu par une élasticité de l'élément d'attache (8).

8. Soupape selon l'une quelconque des revendications 1 à 7, **caractérisée en ce que** l'élément d'attache est configuré sous la forme d'une douille de fixation (8), qui est notamment configurée sous forme symétrique par rotation et qui est en contact circonférentiellement avec le diamètre intérieur du corps de soupape (40) et le diamètre intérieur de la plaque de butée (20).

9. Soupape selon la revendication 8, **caractérisée en ce que** la douille de fixation (8) comprend sur le diamètre extérieur une première surépaisseur circonférentielle (46), qui avance par l'intermédiaire d'un encliquetage dans le premier évidement circonférentiel (22) sur le diamètre intérieur du corps de soupape (40), et/ou une deuxième surépaisseur circonférentielle (48), qui avance dans le deuxième évidement circonférentiel (24) sur le diamètre intérieur de la plaque de butée (20).

10. Soupape selon la revendication 9, **caractérisée en ce que** la première surépaisseur circonférentielle (46) et/ou la deuxième surépaisseur circonférentielle (48) présentent un tracé droit, biaisé ou arrondi (41) sur le diamètre extérieur de la douille de fixation (8) dans sa zone entrante et sortante.

11. Procédé de fabrication d'une soupape selon l'une quelconque des revendications 1 à 9, **caractérisé en ce que** l'élément d'attache (8) est déformé lors du montage de telle sorte qu'une liaison par accouplement de forme se forme avec la plaque de butée (20), l'élément d'attache (8) reposant sur le corps de soupape (40) dans la direction axiale par appui et la plaque de butée (20) et le corps de soupape (40) étant par conséquent maintenus en appui par l'élément d'attache (8) .

12. Pompe, notamment pompe haute pression (1) d'un système d'injection de carburant avec une soupape d'aspiration (2), **caractérisé en ce que** la soupape d'aspiration (2) est configurée selon au moins l'une quelconque des revendications précédentes.
